Europäisches Patentamt

(19) European Patent Office

Office européen des brevets

(11) Publication number: **0 024 758**
**B1**

(12) **EUROPEAN PATENT SPECIFICATION**

(45) Date of publication of patent specification: **28.11.84**

(51) Int. Cl.³: **C 02 F 3/12, B 01 J 8/20**

(21) Application number: **80200763.3**

(22) Date of filing: **13.08.80**

(54) **An oxidative biological purification process for waste water.**

(30) Priority: **27.08.79 NL 7906426**

(43) Date of publication of application:
**11.03.81 Bulletin 81/10**

(45) Publication of the grant of the patent:
**28.11.84 Bulletin 84/48**

(84) Designated Contracting States:
**AT CH DE GB IT LI NL SE**

(56) References cited:
**EP-A-0 019 216**
**GB-A-1 401 874**
**US-A-3 904 518**
**US-A-4 009 098**
**US-A-4 009 099**
**US-A-4 009 105**
**US-A-4 032 407**

**PROCEEDING OF 30TH INDUSTRIAL WASTE
CONFERENCE, PURDUE UNIVERSITY,
LAFAYETTE, INDIANA, 1975, PAGES 14 TO 22**

(73) Proprietor: **Gist - Brocades N.V.
Wateringseweg 1 P.O. Box 1
NL-2600 MA Delft (NL)**

(72) Inventor: **Heijnen, Joseph Johannes
Granaathorst 101
NL-2592 SR 's-Gravenhage (NL)**
Inventor: **Lourens, Pieter Adriaan
Brahmslaan 77
NL-2625 BT Delft (NL)**
Inventor: **Venema, Cornelis Pieter
Roland Holstlaan 876
NL-2624 JJ Delft (NL)**
Inventor: **Vroemen, Albert Joseph
Leursebaan 466
NL-4839 AP Breda (NL)**

(74) Representative: **Van der Straaten, Jan Anthony
et al
c/o GIST-BROCADES N.V. Patents and
Trademarks Department Wateringseweg 1 P.O.
Box 1
NL-2600 MA Delft (NL)**

Courier Press, Leamington Spa, England.

## Description

The present invention relates to an oxidative biological purification process for waste water of domestic or of, in particular, industrial origin applicable at a pH varying from 5 to 8 in the oxidation space, comprising passing the waste water upwards through an oxidation space containing sludge attached to an insoluble carrier (e.g. sand), while completely and continually separating the purified waste water leaving the oxidation space from sludge and recycling the separated sludge into the oxidation space.

Although not comprising attachment of aerobic activated sludge to insoluble carrier particles, a process pertaining to substantially constant sludge concentration in the oxidation space and to complete recycling of separated sludge to the oxidation space is substantially known from British patent specification No. 1341107.

According to that patent specification waste water from industries processing agricultural products or from food industries, i.e. strongly contaminated waste water having a COD which can be even more than 16 kg/m$^3$, is fed at a constant rate into an oxidation space wherein a temperature is maintained between 12° and 40°C and wherein the water is kept in turbulent motion by injecting air in an amount of 0.2—2 m$^3$/m$^3$ of water per minute, so that the solids and the aerobic activated sludge are homogeneously distributed in the waste water. Thus with an air-flow rate in the oxidation space between the claimed limits and with complete recycling of unattached aerobic activated sludge separated from the purified waste water by centrifugation, filtration or settling and with a space load per day between the claimed limits, stable conditions are achieved with a relatively high, substantially constant sludge concentration in the oxidation space, under which conditions the energy, released by the oxidation of the COD supplying substances, is used for maintenance of the aerobic biomass and a considerable reduction of the waste water COD is obtained.

The example of said British patent specification describes the purification of the waste water of a sugar mill, said waste water with a COD of 5.4 kg/m$^3$ being passed at a constant rate of 2 m$^3$/h through a reactor of 8 m height and of 1.6 m diameter (volume 16 m$^3$), wherein a temperature of 20°C is maintained and wherein, due to a cylinder jacket concentrically arranged around the axis at the bottom of the reactor and by injecting 0.55 m$^3$/min. of air per m$^3$ of non-expanded waste water an intensive circulation of waste water is obtained.

With a residence time of 4 h in the reactor and with completely recycling the aerobic activated sludge, a sludge concentration in the oxidation space of 40 g/l dry substance and a COD reduction of the waste water of 5 kg/m$^3$ (92% of the initial COD) are obtained.

Said process is quite suitable for purifying waste water with a substantially constant COD, e.g. waste water from a sugar mill for which in a simple manner a constant waste water flow rate can be realized, because also the amount of waste water produced per hour is substantially constant, but said process is not very practical.

Separating aerobic activated sludge from purified water by centifugation or filtration requires a great amount of energy, while separating said sludge which was dispersed homogeneously in the waste water by settling is a slow process, which requires a very large settling tank.

Further, in pactice, waste water having a constant COD is not usual and also the amounts of waste water which are available for purification, vary strongly in general.

In principle, these considerable problems arising in practice in the separation and the recycling of unattached biomass can be circumvented at least to some extent by using so-called fluidized-bed reactors, wherein the microorganisms grow and multiply while attaching to insoluble carrier particles of suitable dimensions.

An example of application of this alternative, relating too to oxidative biological treatment of waste waters, is given by the process of US Patent No. 4,009,099, dealing with nitrification of ammonia-containing waste waters, which process is technologically quite similar to the process of US Patent No. 4,009,098 describing bioligical aerobic removal of COD.

Another application of the fluidized-bed method concerning the employment of biologically overgrown insoluble carrier particles is known from US Patent No. 4,032,407, the approach of which is not related to a method for aerobic biological purification of waste water, but to the construction of a tapered reactor for various catalyzed biological conversions, wherein it is possible to generate, when necessary, very high flow rates for abrasion in situ of too much overgrown particles with the help of shear forces exerted mainly by the fast flow of the liquid.

Now it has been found that a process, of the kind indicated in the preamble, gives a reliable waste water purification with a smooth separation of the attached aerobic activated sludge from the purified water, even when the COD of the waste water varies between about 300 g/m$^3$ (domestic waste water) and 20 kg/m$^3$ (a value which may appear in waste water of the fermentation industry) and even when the waste water is supplied in varying volume, when said waste water is passed through the oxidation space at such a rate that space loads of COD of 4—50 kg/m$^3$ day and of nitrogen of at most 2.5 kg/m$^3$ day are achieved by application of a residence time between the limits of 0.3 to 20 h, and all activated sludge separated off is recycled into the oxidation space.

The carrier particles with the attached aerobic activated sludge are so heavy that they settle rapidly and smoothly; supervision over the settling by skilled personnel is practically not necessary.

Whereas settling tanks used with the process of British patent specification No. 1341107, due to the nature of the dispersed sludge, should be so large that they must necessarily be situated upon or in the bottom, while the settling tanks envisaged conceivably for the hereinbefore indicated fluidized-bed processes of the cited three US Patents still require placing at the same level, and such settling tanks generally have to be adapted with special provisions (e.g. recycling lines with pumps) for the return in the oxidation space of a part of the not attached sludge or of abraded carrier particles and/or for further, external processing of secured unattached sludge, when applying sludge on a carrier according to the present invention, the dimensions of the settling tank can be so small that it can be situated on top of the oxidation space. So a saving of floor space is realized and, moreover, the settled sludge can be recycled to the oxidation space by gravity.

As carrier to which the sludge is attached, any granular material having a specific gravity of more than 1000 kg/m³ can be used. Sand having an average granular size of 0.1—2 mm is preferred as carrier. Such sand is easily available and inexpensive, has good mechanical properties (it does not disintegrate) and a favourable specific gravity, and aerobic activated sludge adheres quite well to sand. The granular size of 0.1—2 mm provides particles covered with activated sludge with an optimum effective surface; particles smaller than 0.1 mm are not suitable, because such particles overgrown with sludge settle rather poorly. Particles having a diameter of more than 2 mm have such a small specific surface for the attachment of sludge that the sludge concentration to be reached in the oxidation space is insufficient.

In the oxidation space the distribution of the carrier particles with the aerobic activated sludge attached thereto is suitably promoted, as is known per se from British patent specification 1341107, by injecting air, The injected air also provides the oxygen supply needed for oxidizing the COD of the waste water.

The oxidative biological purification of waste water according to the present invention can be effected at the temperature automatically arising in the oxidation space. For domestic waste water usually having a temperature of 10°—20°C, this means that purification is effected at a temperature between 10° and 20°C. In general industrial waste water has a higher temperature that is between 10° and 60°C. Therefore the purification is preferably effected at a temperature between 10° and 60°C, in particular between 30° and 50°C, because at such temperature the microorganisms are optimally effective. Such a temperature is generally easily reached for industrial waste water, because industrial waste water is usually warm and has a high COD, causing a rise in temperature with the aerobic purification.

Due to the fair distribution of the carrier particles with the aerobic activated sludge attached thereto in the oxidation space, even waste water with a strongly varying composition, can be purified; it is not necessary to take special provisions to smoothen variations in COD-content and nitrogen content or to apply pH-corections in the influent waste water.

Even when the pH of the waste water varies between 3 and 11, the pH in the oxidation space appears to be stabilized between 5 and 8.

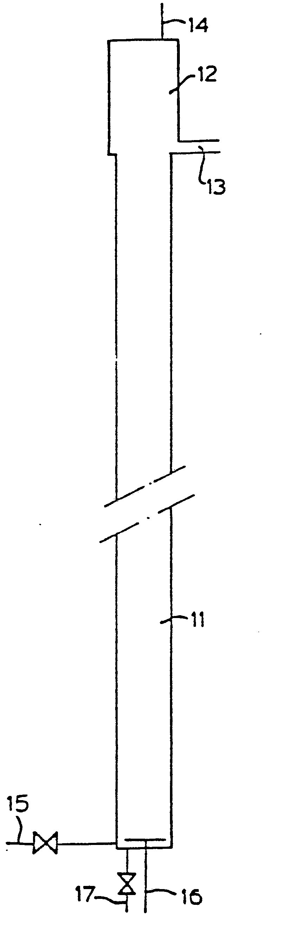

The present invention is elucidated in the Example with reference to the drawing, which schematically shows an oxidation space in the form of a vertical column for purifying waste water which is passed in an upward direction through the column, by means of attached aerobic activated sludge, a settling tank being mounted on the top of the oxidation space, wherein the activated sludge attached to a carrier is separated from purified waste water and is directly recycled into the oxidation space.

### Example

This example describes the oxidative biological purification of waste water in a column as shown in the drawing. The column 11 had a height of 6.5 m, a diameter of 25 cm and a useful volume of 300 l. On top of the column 11 was a settling tank 12 with a height of 75 cm provided with an overflow with outlet for purified water 13 and with a degassing line 14. At the bottom of the column there was an inlet 15 for waste water as well as an air inlet 16 provided with a star-shaped distributor. Via steam line 17 steam could be injected to control the temperature in the column.

The solumn was filled with 80 kg of silver sand having a particle size of 0.1—0.3 mm, a density of 2.6 g/cm³ and a bulk density of 1.65 g/cm³.

Subsequently waste water having a COD of 300 mg/l was fed into the column at a rate of 790 l/h (residence time in the column 0.38 h), and via line 16, 20 Nm³/h of air was injected in the column (air velocity calculated on cross-section of empty column 11 cm/s).

The temperature of the waste water in the column was maintained at 40°C by injecting steam via line 17 and the pH was controlled between 6 and 8.

After one week the silver sand granules were overgrown with a layer of activated sludge (sludge concentration 15 g/l of reactor volume) and stationary conditions were reached, whereby in the settling tank all the sludge on carrier was separated from the purified waste water and recycled to the oxidation column by gravity.

Under the conditions indicated (a COD load of the oxidation space of 20 kg/m³ day) a COD reduction of 70% was achieved. The oxygen consumption was 1.1 kg $O_2$ per kg of converted COD.

This means that all the COD converted was burnt to $CO_2$.

## Claims

1. An oxidative biological purification process for waste water of domestic or of, in particular, industrial origin applicable at a pH varying from 5 to 8 within the oxidation space, comprising passing the waste water upwards through an oxidation space containing sludge attached to an insoluble carrier (e.g. sand), while completely and continually separating the purified waste water leaving the oxidation space from sludge and recycling the separated sludge into the oxidation space, characterized in that waste water with highly variable COD is purified by means of activated sludge, said waste water being passed through the oxidation space at such a rate that space loads of COD of 4—50 kg/m³ day and of nitrogen of at most 2.5 kg/m³ day are achieved by application of a residence time between the limits of 0.3 to 20 h, and all activated sludge separated off is recycled into the oxidation space.

2. A process according to claim 1, characterized in that separation of the purified waste water from activated sludge carried along takes place in a settling tank placed on top of the oxidation space.

3. A process according to claims 1 and 2, characterized in that continuously applied stirring motions in the oxidation space are provided for only by the introduction of air or another gaseous source of oxygen and of waste water.

4. A process according to one of the preceding claims, characterized in that the purification is carried out at a temperature of 10—60°C.

5. A process according to claim 4, characterized in that the purification takes place at a temperature of 30—50°C.

6. A process according to one of the preceding claims, characterized in that the waste water is fed to the oxidation space without pH-correction and without flattening the peaks in COD- and nitrogen content.

## Revendications

1. Procédé d'épuration biologique, par oxydation, d'eaux usées d'origine ménagère ou, en particulier, d'origine industrielle, applicable à un pH allant de 5 à 8 dans le champ d'oxydation, selon lequel on fait passer les eaux usées de bas en haut à travers un champ d'oxydation contenant de la boue fixée à une matière de support insoluble (par exemple, du sable), tout en séparant de façon complète et continue d'avec la boue les eaux usées épurées qui sortent du champ d'oxydation et en réintroduisant dans le champ d'oxydation la boue récupérée, caractérisé en ce que l'on épure au moyen d'une boue activée des eaux usées d'une demande chimique en oxygène fortement variable, en faisant passer lesdites eaux usées à travers le champ d'oxydation à une vitesse telle que l'on obtienne dans la champ des charges ayant une demande chimique en oxygène de 4—50 kg/m³ par jour et une teneur en azote de 2,5 kg/m³ au plus par jour par l'emploi d'une durée de séjour allant de 0,3 à 20 heures, et en ce que l'on réintroduit dans le champ d'oxydation toute la boue activée récupérée.

2. Procédé selon la revendication 1, caractérisé en ce que la séparation des eaux usées épurées d'avec la boue activée entraînée est effectuée dans une cuve de sédimentation placée au sommet du champ d'oxydation.

3. Procédé selon les revendications 1 et 2, caractérisé en ce qu'une agitation effectuée continuellement sur le champ d'oxydation est provoquée seulement par l'introduction d'eaux usées et d'air ou d'une autre source gazeuse d'oxygène.

4. Procédé selon l'une des revendications précédentes, caractérisé en ce que l'épuration est effectuée à une température de 10—60°C.

5. Procédé selon la revendication 4, caractérisé en ce que l'épuration est effectuée à une température de 30—50°C.

6. Procédé selon l'une des revendications précédentes, caractérisé en ce que les eaux usées sont introduites dans le champ d'oxydation sans correction du pH et sans égalisation des pointes de la demande chimique en oxygène et de la teneur en azote.

## Patentansprüche

1. Oxidatives biologisches Reinigungsverfahren für Abwasser aus Haushalt und insbesondere Industrie, das bei einem pH-Wert, der von 5 bis 8 variiert, innerhalb des Oxidationsraums anwendbar ist, bei dem man das Abwasser durch einen Oxidationsraum, der an einen unlöslichen Träger (z.B. Sand) angelagerten Schlamm enthält, nach oben leitet, während man das gereinigte Abwasser, das den Oxidationsraum verlässt, vollständig und kontinuierlich vom Schlamm abtrennt und den abgetrennten Schlamm in den Oxidationsraum zurückführt, dadurch gekennzeichnet, dass man Abwasser mit stark variablem CSB mit Hilfe von Belebtschlamm reinigt, wobei das Abwasser mit einer solchen Geschwindigkeit durch den Oxidationsraum geleitet wird, dass durch Anwendung einer Verweilzeit zwischen den Grenzen von 0,3 bis 20 Stunden CSB-Raumbelastungen von 4 bis 50 kg/m³ x Tag und Stickstoff-Raumbelastungen von höchstens 2,5 kg/cm³ x Tag erziet werden, und dass man allen abgetrennten Belebtschlamm in den Oxidationsraum zurückführt.

2. Verfahren nach Anspruch 1, dadurch gekennzeichnet, dass die Abtrennung des gereinigten Abwassers von mitgeführtem Belebtschlamm in einem Absetztank stattfindet, der über dem Oxidationsraum angeordnet ist.

3. Verfahren nach den Ansprüchen 1 und 2, dadurch gekennnzeichnet, dass kontinuierlich angewandte Rührbewegungen in dem Oxidationsraum lediglich durch das Einleiten von Luft oder einer anderen gasförmigen Sauerstoffquelle und von Abwasser erzeugt werden.

4. Verfahren nach einem der vorangehenden Ansprüche, dadurch gekennzeichnet, dass man die Reinigung bei einer Temperatur von 10 bis 60°C ausführt.

5. Verfahren nach Anspruch 4, dadurch gekennzeichnet, dass die Reinigung bei einer Temperatur von 30 bis 50°C stattfindet.

6. Verfahren nach einem der vorangehenden Ansprüche, dadurch gekennzeichnet, dass man das Abwasser ohne pH-Korrektur und ohne Abflachung der Spitzenwerte von CSB- und Stickstoffgehalt in den Oxidationsraum einspeist.